## Europäisches Patentamt

## European Patent Office

## Office européen des brevets

(11) Veröffentlichungsnummer: **0 135 596**
**B1**

(12) **EUROPÄISCHE PATENTSCHRIFT**

(45) Veröffentlichungstag der Patentschrift:
01.07.87

(21) Anmeldenummer: **83109302.6**

(22) Anmeldetag: **20.09.83**

(51) Int. Cl.⁴: **B 60 N 1/04**

(54) **Kraftfahrzeugsitz, insbesondere für zweitürige Kraftfahrzeuge.**

(43) Veröffentlichungstag der Anmeldung:
**03.04.85 Patentblatt 85/14**

(45) Bekanntmachung des Hinweises auf die Patenterteilung:
**01.07.87 Patentblatt 87/27**

(84) Benannte Vertragsstaaten:
**DE FR GB IT**

(56) Entgegenhaltungen:
**DE-A-2 233 915**
**DE-A-2 640 425**
**DE-A-2 724 048**
**DE-A-2 812 322**
**DE-A-3 151 105**
**DE-A-3 226 198**
**DE-B-2 118 060**
**GB-A-2 033 738**
**US-A-4 143 911**

(73) Patentinhaber: **KEIPER RECARO GmbH & Co.,**
**Büchelstrasse 54- 58, D-5630 Remscheid 14 (DE)**

(72) Erfinder: **Klüting, Bernd, Ing. grad., Jung- Stilling-**
**Weg 18, D-5608 Radevormwald (DE)**
Erfinder: **Busch, Hans- Walter, Tizianweg 15, D-4010**
**Hilden (DE)**
Erfinder: **Thiel, Peter, Stockter Strasse 138, D-5630**
**Remscheid (DE)**

(74) Vertreter: **Mentzel, Norbert, Dipl.- Phys.,**
**Patentanwälte Dipl.- Phys. Buse Dipl.- Phys.**
**Mentzel Dipl.- Ing. Ludewig Unterdörnen 114,**
**D-5600 Wuppertal 2 (DE)**

EP 0 135 596 B1

## Beschreibung

Die Erfindung betrifft einen Kraftfahrzeugsitz, insbesondere für zweitürige Kraftfahrzeuge, dessen Rückenlehne drehgelenkig mit seinem auf einer Schienenanordnung längsverschiebbaren Sitzteil verbunden und nach vorn klappbar ist, wobei die Schienenanordnung eine zur Längsverstellung des Sitzteiles lösbare Verriegelungseinrichtung und eine durch die Rückenlehnenbetätigung lösbare, eine mit dem Verschwenken der Rückenlehne synchrone Verschiebebewegung des Sitzteiles zulassende Sperreinrichtung aufweist, wobei die Verriegelungseinrichtung und die Sperreinrichtung miteinander in aufhebbarer Wirkverbindung stehen.

Bei einem aus der DE-A 27 24 048 bekannten Kraftfahrzeugsitz umfaßt die Schienenanordnung neben einer aus Ober- und Unterschiene bestehenden Stellschiene eine aus Ober- und Unterschiene bestehende Zwischenschiene, die gegenüber der Stellschiene unabhängig verschiebbar ist. Während für die Stellschiene eine Verriegelungseinrichtung vorgesehen ist, mit welcher der Sitzteil entsprechend den Wünschen des Sitzbenutzers in seiner Längslage eingestellt werden kann, ist an der Zwischenschiene eine Sperreinrichtung vorgesehen, die über die Rückenlehnenverstelleinrichtung zum Vorklappen der Rückenlehne und gleichzeitigem Vorschieben des die Rückenlehne halternden Sitzteiles gelöst werden kann, um den Einstieg zum Fondteil zweitüriger Kraftfahrzeuge zu erleichtern. Die aus einem Anschlagteil und einem Arretierglied bestehende Sperreinrichtung findet beim Zurückschieben ihre Ausgangslage wieder auf und arretiert in dieser Stellung selbsttätig durch Federwirkung. Bei dieser Ausführungsform sind jedoch zwei Schienenanordnungen übereinander erforderlich, wodurch einerseits eine Verteuerung und andererseits eine größere Bauhöhe des Fahrzeugsitzes verursacht wird.

Außerdem ist aus der DE-B 2 118 060 eine Längsverstelleinrichtung für Kraftfahrzeugsitze gemäß dem Oberbegriff des Anspruchs 1 bekannt, die bei nur einer Schienenanordnung auf jeder Sitzlängsseite eine Verriegelungseinrichtung und eine Sperreinrichtung umfaßt. Dabei weist die Sperreinrichtung einen Hebelarm auf, der an seinem freien Ende mit einem Zugkabel verbunden ist, dessen anderes Ende so mit der Rückenlehne des Kraftfahrzeugsitzes verbunden ist, daß beim Vorschwenken der Rückenlehne die Sperreinrichtung freigegeben wird, so daß der Fahrzeugsitz vorgeschoben werden kann. Nachteilig ist jedoch die direkte Verbindung des Zugkabels mit der Rückenlehne insofern, als daß bei einer Neigungsverstellung der Rückenlehne auch die wirksame Länge des Zugkabels verstellt wird, was im Extremfall dazu führen kann, daß der Hebelarm der Sperreinrichtung seine Verriegelungslage am Gegenzahnelement der Verriegelungseinrichtung nicht mehr sicher einnimmt.

Die Aufgabe der vorliegenden Erfindung besteht darin, eine Längsverstelleinrichtung zu schaffen, die unter Beibehaltung der selbsttätigen Vorlaufbewegung des Fahrzeugsitzes beim Vorschwenken der Rückenlehne und problemloser Wiederauffindung der Feststellage beim Rückschwenken der Rückenlehne von einer Verstellung der Rückenlehnenneigung unbeeinflußt bleibt.

Diese Aufgabe ist erfindungsgemäß dadurch gelöst, daß die Sperreinrichtung von einem die Wiederauffindung der eingestellten Sitzlängslage ermöglichenden Positionierglied während der Verschiebebewegung des Sitzteiles in einer Freigabelage festhaltbar ist. Dadurch läßt sich eine kombinatorische Wirkungsweise von Verriegelungseinrichtung und Sperreinrichtung erzielen, die entweder durch bewußte Auslösung zusammen zur Längslagenverstellung betätigt werden können oder aber durch unbewußte, durch das Vorschwenken der Rückenlehne erfolgende Betätigung getrennt voneinander derart zu betätigen sind, daß das Sitzteil im Anschluß an das Vorschwenken der Rückenlehne vorgeschoben wird und die Freigabelage so lange erfolgt, bis unmittelbar im Anschluß an die Rückschwenkung der Rückenlehne der Sitzteil in seine Ausgangslage zurückgeschoben ist, um dann in der Ausgangslage die Sperrung selbsttätig einfallen zu lassen. Dabei ist diese Längsverstelleinrichtung von der Einrichtung zur Lehnenneigungsverstellung völlig unbeeinflußbar.

Die Erfindung läßt sich in mehreren Ausführungsformen verwirklichen. Bei einer dieser Ausführungsformen ist vorteilhaft die Oberschiene der Schienenanordnung aus einer Halteschiene und einer gegenüber dieser verschiebbaren, mit dem Sitzteil verbundenen Vortransportschiene gebildet, wobei sowohl an der Halteschiene als auch an der Vortransportschiene jeweils ein Sperrhebel schwenkbar gelagert ist, wovon der der Vortransportschiene zugeordnete Sperrhebel einen deckungsgleiche Schwenkschlitze in Halte- und Vortransportschiene durchquerenden Mitnehmerzapfen aufweist, der in einen Schlitz des der Halteschiene zugeordneten Sperrhebels eingreift, der von einem Handstellhebel betätigbar ist. Dabei ist der der Vortransportschiene zugeordnete Sperrhebel durch einen mit der Rückenlehne in Verbindung stehenden Hebelmechanismus allein aus seiner Verriegelungslage mit einer Unterschiene der Schienenanordnung aushebbar.

Um einerseits den in seine Loslage überführten Sperrhebel so lange in dieser gelösten Lage zu halten, bis die Ausgangslage wieder erreicht wird, ist nach einem weiteren Ausgestaltungsmerkmal der ersten Ausführungsform der der Vortransportschiene zugeordnete Sperrhebel durch einen ein Positionierglied bildenden, einen Haltenocken am Sperrhebel beim Vorlauf der Vortransportschiene untergreifenden Arretierhebel in seiner Freigabelage gehalten, bis nach dem Rücklauf der Vortransportschiene der Arretierhebel durch einen an der Halteschiene angeordneten Anschlag aus seiner Arretierlage gedrückt ist und den Sperrhebel zur erneuten Sperrung freigibt. Dabei kann zur Auslösung des Sperrhebels dieser der Vortransportschiene zugeordnete Sperrhebel vorteilhaft durch einen an der Vortransportschiene gelagerten Winkelhebel im Entriegelungssinne betätigbar sein und über eine Zuglasche mit dem Hebelarm eines an der Vortransportschiene gelagerten, mit der Rückenlehne verbundenen Gelenkbeschlages verbunden sein.

In Abwandlung dieser Ausführungsform kann bei gleicher Ausbildung der Verriegelungseinrichtung und der Sperreinrichtung der an der Vortransportschiene gelagerte und mit der Rückenlehne verbundene Gelenkbeschlag vorteilhaft mit seinem Schwenkarm mit einer Koppellasche drehgelenkig verbunden sein, die ihrerseits an der Halteschiene angelenkt ist.

Bei einer weiteren Ausführungsform der Erfindung ist vorzugsweise außer der in der Unterschiene insgesamt verschiebbar angeordneten, den Sitzteil tragenden Oberschiene eine Hilfsschiene mit einem darin angeordneten Schieber vorgesehen, in dem ein in Löcher einer Lochreihe der Hilfsschiene einschwenkbarer Sperrhebel gelagert ist, dessen aus Schieber und Hilfsschiene ausragender Mitnehmerzapfen von einem an der Oberschiene gelagerten Handhebel im Aushubsinne betätigbar ist, wobei der Handhebel seinerseits einen Betätigungszapfen aufweist, der im Lösesinne auf einen an der Oberschiene gelagerten, in eine Zahnreihe der Unterschiene sperrend eingreifenden Verriegelungshebel einwirkt, der durch einen an der Oberschiene gelagerten, von der Schwenkbewegung der Rückenlehne betätigbaren Winkelhebel ebenfalls lösbar ist. Dadurch wurde vermieden, daß in einer Unterschiene zwei gegeneinander bewegbare, eine Oberschiene bildende Teilschienen angeordnet sind, obgleich auch bei dieser Lösung einerseits die Längslage des Sitzteiles einstellbar ist und andererseits beim Vorschwenken der Rückenlehne und gleichzeitigem Vorschieben des Sitzteiles eine sichere Wiederauffindung der eingestellten Sitzposition gewährleistet ist. Zur Wiederauffindung dieser Sitzposition weist der Schieber vorteilhaft einerseits einen aus der Hilfsschiene ausragenden Haltezapfen zum Eingriff in eine Ausnehmung des Winkelhebels und andererseits einen Anschlag für einen an der Oberschiene gelagerten, die Wiederfestlegung der Ausgangslage herstellenden Arretierhebel auf, wobei der Arretierhebel während der Vorschiebebewegung der Oberschiene den Verriegelungshebel in seiner Freigabelage hält.

Bei einer weiteren Ausführungsform der Erfindung ist vorzugsweise der von einem Handstellhebel im Lösesinne betätigbare, in eine Lochreihe der Unterschiene eingreifende Sperrhebel in einem zwischen Oberschiene und Unterschiene angeordneten Gleitschieber gelagert und untergreift einen ebenfalls in die Lochreihe der Unterschiene eingreifenden, an der Oberschiene gelagerten Verriegelungshebel, der seinerseits mit einem ebenfalls an der Oberschiene gelagerten, den Gleitschieber halternden Distanzhebel im Lösesinn gekuppelt ist, wobei der Distanzhebel über einen Mitnehmerzapfen von einem an der Oberschiene gelagerten und durch die Schwenkbewegung der Rückenlehne betätigbaren Auslösehebel im Lösesinn aus seiner Verbindung mit dem Gleitschieber lösbar ist. Zur Kupplung des Verriegelungshebels mit dem Distanzhebel einerseits und zur Arretierung der Freigabelage des Verriegelungshebels ist dieser mit dem Distanzhebel durch eine den Distanzhebel übergreifende verriegelungsseitige Abwinklung gekuppelt und durch einen an der Oberschiene angelenkten Arretierhebel in Löselage bei vorgeschobener Oberschiene halterbar, wobei der Arretierhebel eine Fühlnase aufweist, die, am Gleitschieber beim Rücklauf der Oberschiene anschlagend, Distanzhebel und Verriegelungshebel zur erneuten Verriegelung zwischen Oberschiene und Unterschiene freigibt. Bei dieser letztgenannten Lösung sind die mechanischen Bauteile auf gedrängtem Raum im Bereich zwischen Ober- und Unterschiene in eine Aufweitung der Oberschiene einragend angeordnet. Eine derartige, die Vorteile der Längslagenverstellung des Sitzteiles einerseits ermöglichende und andererseits das Vorschieben des Sitzteiles beim Vorschwenken der Rückenlehne und Wiederauffinden der eingestellten Sitzposition sichernde Vorrichtung ist insbesondere dann sehr vorteilhaft, wenn deren mechanische Bauteile auf engstem Raum unterzubringen sind, so daß die Bauhöhe des Sitzes nicht beeinträchtigt wird.

Die Erfindung ist in Ausführungsbeispielen auf der Zeichnung dargestellt und wird nachfolgend näher erläutert.

Es zeigen:

Fig. 1 einen Fahrzeugsitz mit der erfindungsgemäßen Verstelleinrichtung in einer Seitenansicht in schematischer Darstellung,

Fig. 2 die auf einer Sitzlängsseite angeordnete, aus einer Unter- und Oberschiene bestehende, mit einer Verriegelungseinrichtung und einer Sperreinrichtung ausgestattete Schienenanordnung, mit an der Oberschiene angelenktem Gelenkbeschlag für die Rückenlehne, in einer von der Sitzinnenseite her gesehenen Seitenansicht im Sperrzustand,

Fig. 2a die aus Fig. 2 ersichtliche Schienenanordnung in einem die Sperreinrichtung gelösten Zustand,

Fig. 3 die Sperr- und Verriegelungseinrichtung umfassende Schienenanordnung auf einer Sitzlängsseite in einer Draufsicht,

Fig. 4 die aus den Fig. 2 bis 3 ersichtliche Schienenanordnung in einer Seitenansicht auf deren Außenseite gesehen, bei der sich die Verriegelungseinrichtung im Sperrzustand befindet, während der Lösezustand in strichpunktierten Linien dargestellt ist,

Fig. 5 die Schienenanordnung in einem Vertikalschnitt nach der Linie V-V von Fig. 2,

Fig. 6 die Schienenanordnung im hinteren Sitzbereich in einem Schnitt nach der Linie VI-VI von Fig. 2,

Fig. 7 den modifizierten hinteren Bereich einer aus den Fig. 2 bis 6 ersichtlichen Schienenanordnung, bei der die Schwenkbewegung der Rückenlehne mit modifizierten Bauteilen zur Verschiebung der Oberschiene erzielt wird,

Fig. 8 ein weiteres Ausführungsbeispiel einer eine Sperr- und Verriegelungseinrichtung umfassenden Laufschienenanordnung in einer Schnittansicht von der Innenseite des Sitzes her gesehen im Verlauf der Linie VIII-VIII von Fig. 10,

Fig. 9 die aus Fig. 8 ersichtliche Laufschienenanordnung in einer Schnittansicht nach der Linie IX-IX von Fig. 10,

Fig. 10 das aus den Fig. 8 und 9 ersichtliche Ausführungsbeispiel in einer Draufsicht auf den hinteren Bereich einer auf der rechten Längsseite des Sitzes angeordneten Laufschienenanordnung,

Fig. 11 die aus Fig. 10 ersichtliche Laufschienenanordnung in einem Vertikalschnitt nach der Linie XI-XI von Fig. 10,

Fig. 12 die in einer Hilfsschiene angeordnete Sperreinrichtung in einem Schnitt nach der Linie XII-XII von Fig. 10,

Fig. 13 ein weiteres Ausführungsbeispiel einer eine Sperr- und Verriegelungseinrichtung umfassenden Laufschienenanordnung, die im Sperrzustand in einer teilweise aufgebrochenen Vertikalschnittansicht durch die Längsmitte der Schienenanordnung dargestellt ist,

Fig. 14 die aus Fig. 13 ersichtliche Vorrichtung in einer Draufsicht,

Fig. 15 die Sperr- und Verriegelungseinrichtung im Sperrzustand von der Seite her gesehen,

Fig. 16 die Sperr- und Verriegelungseinrichtung in einer die Sitzlagenlängseinstellung ermöglichenden Freigabelage,

> Fig. 17 die Laufschienenanordnung in einem Vertikalschnitt nach der Linie XVII-XVII von Fig. 13.

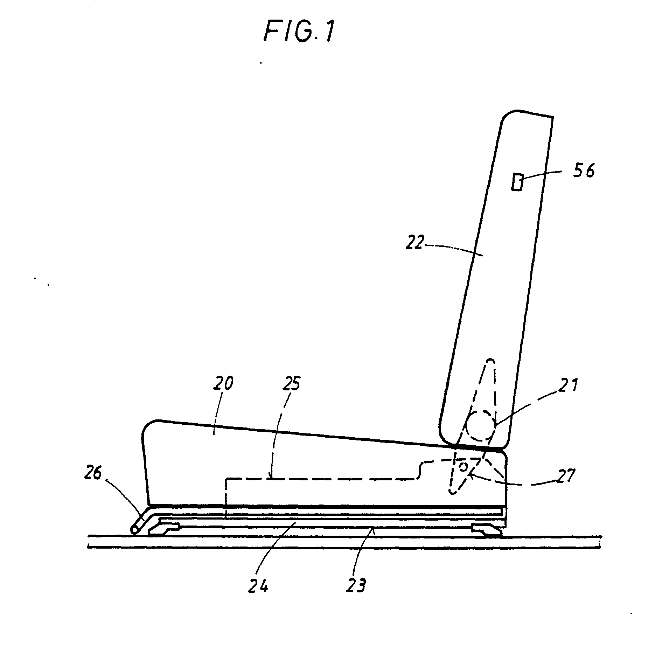

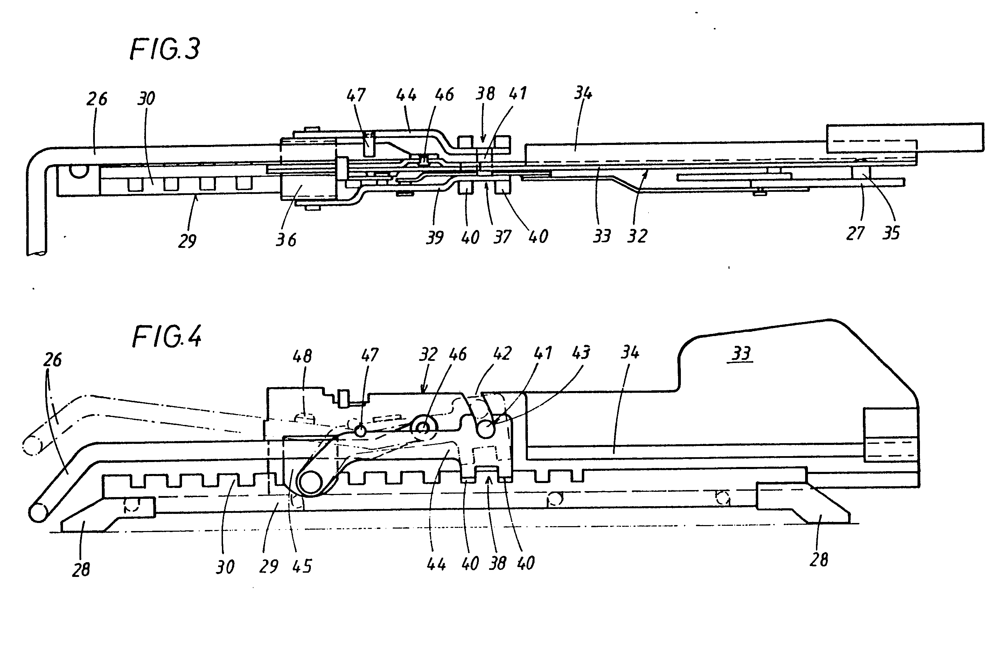

Der in Fig. 1 schematisch dargestellte Fahrzeugsitz umfaßt einen Sitzteil 20, mit dessen rückwärtigem Teil über einen Gelenkbeschlag 21 eine Rückenlehne 22 einstellbar und vorschwenkbar verbunden ist. Dabei ist der Sitzteil 20 an der Oberschiene einer Laufschienenanordnung 23 befestigt, die ihrerseits in einer Unterschiene 24 verschiebbar angeordnet ist. Zwischen Unterschiene 24 und Oberschiene 25 ist eine in Fig. 1 nicht dargestellte Verriegelungseinrichtung und Sperreinrichtung angeordnet, wobei die Verriegelungseinrichtung zur Feststellung der vom Sitzbenutzer eingestellten Längslage des Sitzes durch einen Handstellhebel 26 in Lösestellung überführbar ist, während zur Lösung der die Sitzvorschiebung ermöglichenden Sperreinrichtung als auslösendes Glied der schwenkbar an der Oberschiene 25 befestigte Gelenkteil 27 benutzbar ist.

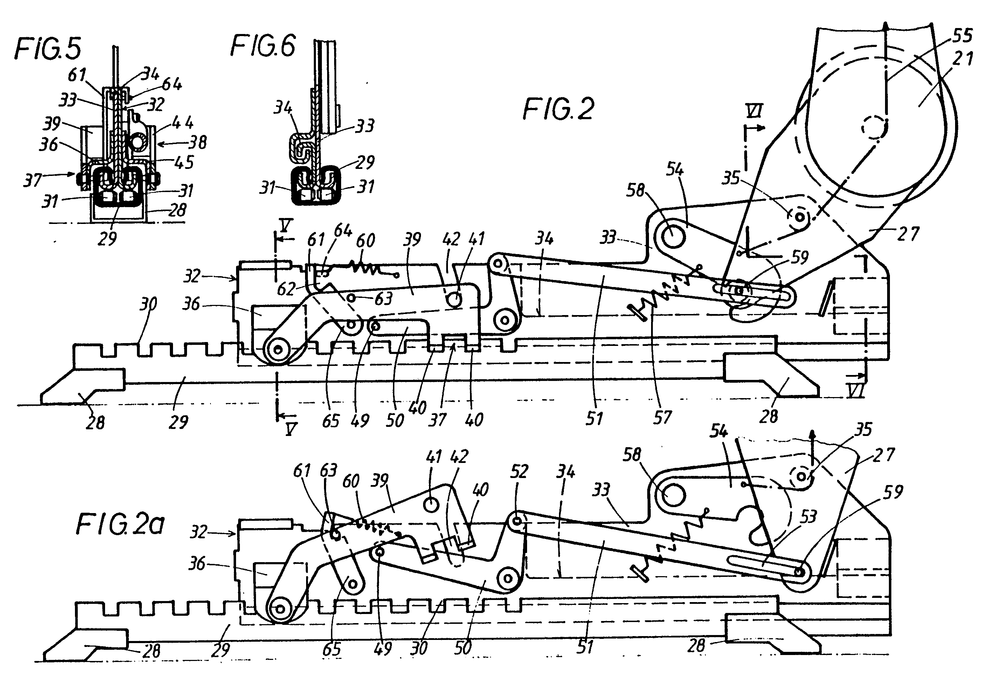

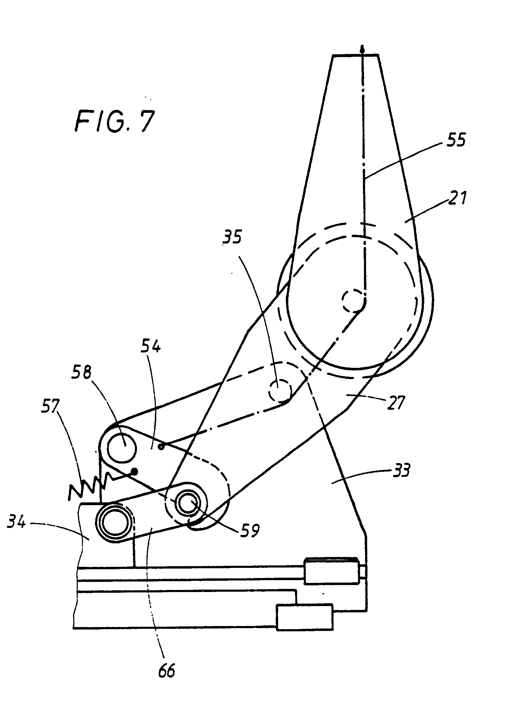

Bei dem aus den Fig. 2 bis 6 ersichtlichen Ausführungsbeispiel ist am Fahrzeugboden beispielsweise über Konsolen 28 eine Unterschiene 29 befestigt, die einen C-profilförmigen Querschnitt aufweist und oberseitig mit einer in Längsrichtung verlaufenden Öffnung versehen ist. In dem die Öffnung aufweisenden oberseitigen Bereich ist die Unterschiene 29 mit einer Reihe von hintereinander in bestimmtem Abstand zueinander angeordneten, eine Zahnreihe 30 bildenden Ausnehmungen versehen. In der Unterschiene 29 sind in Breitenrichtung nebeneinander zwei Bahnen von Rollen 31 angeordnet, auf denen sich die die Öffnung der Unterschiene 29 durchgreifende Oberschiene 32 abstützt. Diese Oberschiene besteht bei der aus den Fig. 2 bis 6 ersichtlichen Ausführungsform aus einer Vortransportschiene 33 und einer Halteschiene 34. Der Sitzteil ist allein mit der Vortransportschiene 33 verbunden, an welcher auch allein im Gelenkpunkt 35 der Gelenkteil 27 des Gelenkbeschlages 21 schwenkbar angeordnet ist. An der zur Sitzinnenseite hinweisenden Vortransportschiene 33 ist in deren vorderem Bereich an einem mit dieser fest verbundenen Z-profilartigen Bügel 36 ein zur Sperreinrichtung 37 gehörender Sperrhebel 39 schwenkbar gelagert, der mit unterseitigen Abwinklungen 40 auf einer Seite der Unterschiene in deren Zahnreihe 30 eingreifen kann. Oberhalb der Abwinklungen 40 weist der Sperrhebel 39 einen fest mit diesem verbundenen Mitnehmerzapfen 41 auf, der in Verriegelungslage deckungsgleiche Schwenkschlitze 42 sowohl in der Vortransportschiene 33 als auch in der Halteschiene 34 durchgreift und in einen Schlitz 43 in dem zur Verriegelungseinrichtung 38 gehörenden Riegelhebel 44 eingreifen kann. Dieser Riegelhebel 44 ist auf der Außenseite der Oberschiene 32 an einem mit der Halteschiene 34 fest verbundenen Z-profilartigen Bügel 45 drehgelenkig montiert. Zur Verriegelungseinrichtung 38 gehört neben dem Riegelhebel 44 insbesondere ein an der Halteschiene mittels eines Zapfens 46 drehgelenkig angelenkter Handstellhebel 26, der einen Anlagedaumen 47 am Riegelhebel 44 untergreift. Gleichzeitig ist an der Halteschiene 34 ein Anschlag 48 für den Handstellhebel 26 vorgesehen, durch welchen sichergestellt wird, daß beim Anheben des Handstellhebels 26 der Riegelhebel 44 über seinen Anlagedaumen 47 nur in eine solche Stellung verschwenken kann, daß einerseits seine Abwinklungen 40 aus der zugehörigen Zahnreihe 30 der Unterschiene ausschwenken und andererseits der Riegelhebel die in Fig. 4 in strichpunktierten Linien dargestellte Position nicht nach oben hin überschreiten kann. Beim Anheben des Handstellhebels in die ebenfalls in Fig. 4 in strichpunktierten Linien dargestellte Lage wird über den am Sperrhebel 39 festgelegten Mitnehmerzapfen 41 auch der Sperrhebel in entsprechender Weise angehoben, so daß die gesamte aus Vortransportschiene und Halteschiene bestehende Oberschiene 32 in der Unterschiene 29 verschoben werden kann. Nach Auffinden der dem Sitzbenutzer genehmen Sitzlängslage wird nach Loslassen des Handstellhebels entweder durch das Schwergewicht oder durch nicht dargestellte Rückzugsfedern sowohl der Sperrhebel 39 als auch der Riegelhebel 44 in die Sperrlage mit der Zahnreihe 30 der Unterschiene 29 zurückgeführt. Der auf der Innenseite der Schienenanordnung angeordnete Sperrhebel 39 wird von dem Hubzapfen 49 eines an der Vortransportschiene gelenkig gelagerten Winkelhebels 50 untergriffen. Mit dem dem Hubzapfen 49 gegenüberliegenden Gelenkende 52 des Winkelhebels 50 ist eine Zuglasche 51 einerends verbunden, die andernends über ein Langloch 53 mit dem Gelenkteil 27 des Gelenkbeschlages 21 in Verbindung steht. Gleichzeitig ist am freien Ende des Gelenkteiles 27 ein Fangzapfen angeordnet, der von dem Hakenmaul eines auf dem Riegelzapfen 58 an der Vortransportschiene 33 gelagerten Hakengliedes 54 umfaßt werden kann. Dieses Hakenglied 54 ist über einen Seilzug 55 mit einem in der Rückenlehne 22 gelagerten Handhebel 56 (Fig. 1) verbunden. Das im Sperrsinn von einer Feder 57 belastete Hakenglied 54 sichert in Gebrauchslage die Halterung des Gelenkteiles 27 an der Vortransportschiene 33. Wenn nun bei einer der Fig. 2 entsprechenden Ausgangslage die Rückenlehne nach vorn geschwenkt werden soll, so ist zunächst der Handhebel 58 zu lösen, wodurch über den Seilzug 55 das Hakenglied 54 von dem Fangzapfen am Gelenkteil 27 freikommt. Nun kann die Rückenlehne vorgeschwenkt werden, wobei sich der aus dem Fangzapfen vorragende Verbindungsbolzen 59 am freien Ende des Gelenkteiles 27 im Langloch 53 der Zuglasche zunächst so weit verschieben kann, bis der Verbindungsbolzen 59 am Ende des Langloches 53 angelangt ist. Während der letzten Phase der Vorschwenkbewegung der Rückenlehne wird nun über die Zuglasche 51 der Winkelhebel 50 in die aus Fig. 2a ersichtliche Lage nach oben geschwenkt, wobei auch über den Hubzapfen 49 am Winkelhebel 50 der Sperrhebel 39 aus der Zahnreihe 30 der Unterschiene 29 ausgeschwenkt wird. Demzufolge kann ab diesem Moment durch weitere Kraftausübung auf die Rückenlehne im Vorlaufsinne der an der Vortransportschiene 33 befestigte Fahrzeugsitz nach vorn geschoben werden, wobei durch eine Feder 60 ein an der Vortransportschiene 33 schwenkbar festgelegter Arretierhebel 61 mit einer Ausnehmung 62 einen Haltezapfen 63 am Sperrhebel 39 untergreifen kann und diesen in seiner Freigabelage hält. Erst wenn die Rückenlehne zurückgeschwenkt wird und damit die Vortransportschiene 33 mit dem Hebelmechanismus wieder in die aus Fig. 2 ersichtliche Lage zurückläuft, kommt der Arretierhebel 61 an einem Anschlag 64 der in diesem Fall ortsunveränderlich gehalterten Halteschiene 34 zur Anlage, wodurch der Haltezapfen 63 des Sperrhebels 39 aus der Ausnehmung 62 des Arretierhebels 61 freikommt und durch sein Schwergewicht oder federbeaufschlagt in die aus Fig. 2 ersichtliche Raststellung zurückgeführt wird. Damit ist die Ausgangslage der Vortransportschiene 33 und damit des Fahrzeugsitzes wieder erreicht. Der Arretierhebel 61 bildet somit ein Positionierglied 65, mit welchem die Ausgangslage des zur Fondbesteigung vorschiebbaren Sitzes wieder erreicht wird.

Bei dem aus Fig. 7 ersichtlichen Ausführungsbeispiel entspricht die Sperreinrichtung 37 und die Verriegelungseinrichtung 38 im wesentlichen der Ausführung, die aus den Fig. 2 bis 6 ersichtlich ist. Unterschiedlich ist bei der aus Fig. 7 ersichtlichen Ausführungsform lediglich der Übertragungsmechanismus vom Gelenkteil 27 des Gelenkbeschlages 21 zum Betätigungsmechanismus an der Halteschiene 34. Das Hakenglied 54 kann hier, wie bei der vorher beschriebenen Ausführungsform, durch einen Seilzug 55 aus einer Verriegelungsposition geschwenkt werden. Es ist jedoch auch möglich, statt des Seilzuges 55 einen nicht dargestellten Handhebel zur Verschwenkung des Hakengliedes 54 zu benutzen. Dabei ist an dem den Fangzapfen für das Hakenglied 54 aufweisenden Verbindungsbolzen 59 auch eine Koppellasche 66 angelenkt, die andernends in drehgelenkiger Verbindung mit der Halteschiene 34 steht. Beim Vorschwenken der Rückenlehne erfolgt nun die Übertragung der Schiebebewegung nicht über den aus den Fig. 2 bis 6 ersichtlichen Hebelmechanismus, sondern über den Gelenkpunkt 35. Wird nämlich die Rückenlehne vorgeschwenkt, so schwenkt der Gelenkteil 27 um den Gelenkpunkt 35, wodurch der Verbindungsbolzen 59 auf einem Kreisbogen der Koppellasche 66 um ihren Anlenkpunkt an der Halteschiene 34 nach unten bewegt wird. Dabei ist selbstverständlich zuvor das Hakenglied 54 vom Fangzapfen gelöst. Da sich jedoch der Verbindungsbolzen 59 mit Fangzapfen in horizontaler Richtung infolge der Koppellasche 66 nicht bewegen kann, wird beim Vorschwenken der Rückenlehne über den Gelenkpunkt 35 die Vortransportschiene 33 vorgeschoben. Die übrigen Entriegelungs- und Verriegelungsverhältnisse entsprechenden denjenigen des aus den Fig. 2 bis 6 ersichtlichen Ausführungsbeispieles.

Bei dem aus den Fig. 8 bis 12 ersichtlichen Ausführungsbeispiel wird eine Unterschiene eingesetzt, wie sie bereits bei den vorbeschriebenen Ausführungsbeispielen verwendet wurde. Auch diese Unterschiene weist eine Zahnreihe 30 auf. Die aus zwei Schienenteilen zusammengesetzte Oberschiene bildet jedoch eine Einheit, wobei die beiden Schienenteile der Oberschiene nicht gegeneinander verschiebbar sind, sondern vielmehr fest miteinander in Verbindung stehen. An dieser Oberschiene ist auf der Sitzaußenseite an einem Bügel 36' ein zur Verriegelungseinrichtung 38 gehörender Verriegelungshebel 44' gelagert, der eine Ausnehmung 67 in der Oberschiene 25 durchgreift und in eine Zahnreihe 30 der Unterschiene einrasten kann. Auf der Innenseite der Oberschiene 25 ist ein Handstellhebel 26 um den Zapfen 68 schwenkbar gelagert, an dem einerseits ein den Verriegelungshebel 44' untergreifender Mitnehmer 69 befestigt ist und der andererseits einen später noch zu erläuternden Mitnehmerhaken 70 aufweist. Mit Abstand und parallel zur Unterschiene 24 ist neben dieser innenseitig eine Hilfsschiene 71 angeordnet, die unterseitig mit eine Lochreihe bildenden Löchern 72 versehen ist. In dieser Hilfsschiene 71 ist ein Schieber 73 gleitend angeordnet, in dessen Hohlraum ein zur Sperreinrichtung 37 gehörender Sperrhebel 74 um den Gelenkpunkt 75 schwenkbar angeordnet ist. Der Sperrhebel 74 faßt mit einer Zahnung 76 in Sperrstellung in die Löcher 72 der Hilfsschiene 71. Am Sperrhebel 74 ist ein Aushubzapfen 77 angeordnet, der von dem zuvor erwähnten Mitnehmerhaken 70 des Handstellhebels 26 untergriffen werden kann. Am Schieber 73 ist ein aus der Hilfsschiene 71 austretender Zapfen 78 angeformt, der von einer Schlitzaufnahme auf dem Bolzen 79 gelagerten Winkelhebel 80 umgriffen werden kann. Im mittleren Bereich seines Hebelarmes zwischen der Schlitzaufnahme und dem Bolzen 79 ist am Winkelhebel 80 ein Mitnehmerstift 81 befestigt, der ein Langloch in der Oberschiene 25 durchquerend in eine Mitnehmeraufnahme 82 im Verriegelungshebel 44' eingreift.

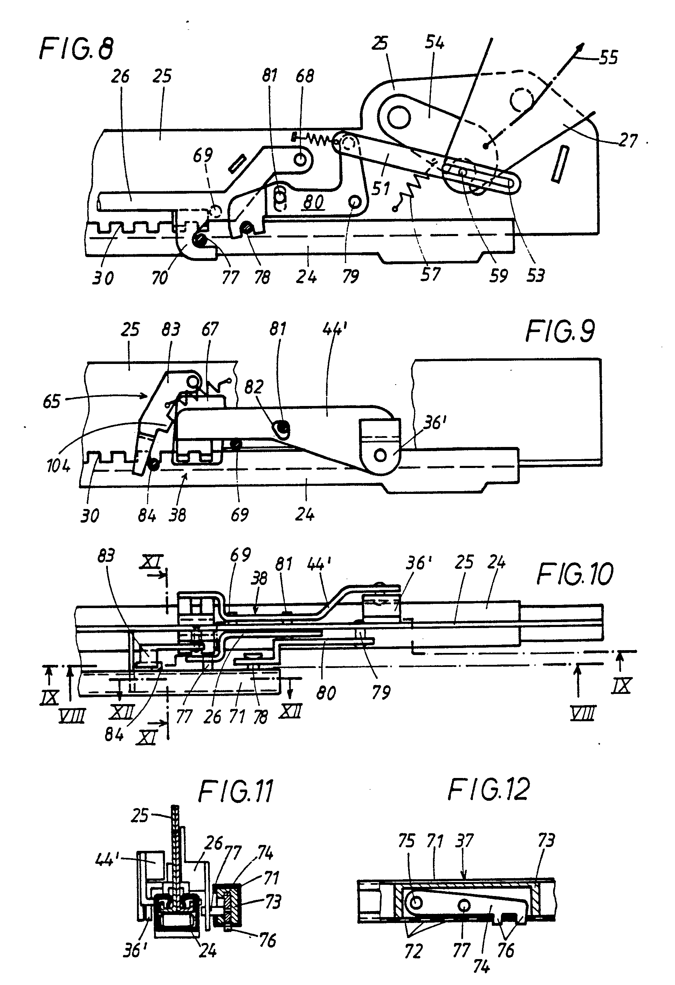

Wenn nun der Handstellhebel 26 im Freigabesinne hochgeschwenkt wird, so hebt dieser über seinen Mitnehmerhaken 70 und den Aushubzapfen 77 einerseits den Sperrhebel 74 aus der Lochreihe 72 der Hilfsschiene in eine Freigabelage aus und andererseits über den am Handstellhebel 26 festgelegten Mitnehmer 69 den Verriegelungshebel 44' aus der Zahnung 30 der Unterschiene 24 aus. Damit läßt sich die Oberschiene 25 gegenüber der Unterschiene 24 verschieben und durch Niederdrücken des Handstellhebels 26 an der vom Sitzbenutzer gewünschten Stelle wieder festlegen, was - wie bei dem vorher beschriebenen Ausführungsbeispiel - entweder durch die Schwerkraft der Sperrhebel selbst oder durch Rückstellfedern erfolgen kann. Um nun jedoch im Falle eines Vorschwenkens der Rückenlehne auch den Sitz zusammen mit der Oberschiene 25 gegenüber der Unterschiene 24 vorschieben zu können, wird zunächst über den Seilzug 55 das Hakenglied 54 gegen die Wirkung der Rückstellfeder 57 gelöst, so daß der am freien Ende des Gelenkteiles 27 angeordnete Verbindungsbolzen 59 im Langloch 53 der mit dem Winkelhebel 80 verbundenen Zuglasche 51 bewegt werden kann. Wenn der Verbindungsbolzen 59 am Ende des Langloches 53 anschlägt, wird über die Zuglasche 51 der Winkelhebel 80 im Uhrzeigersinn ausgeschwenkt, wobei über den Mitnehmerstift 81 auch der Verriegelungshebel 44 aus der Zahnung der Unterschiene 24 ausgehoben wird. Andererseits verläßt gleichzeitig die Schlitzaufnahme des Winkelhebels 80 den am Schieber 73 befindlichen Zapfen 78, so daß der Schieber 73 und der Sperrhebel 74 von der Vorschwenkbewegung der Rückenlehne unbehelligt bleiben. Da die Oberschiene 25 aus ihrer Verriegelungslage mit der Unterschiene 24 gelöst ist, kann die Oberschiene 25 gegenüber der Unterschiene zusammen mit dem Sitz vorfahren. Dabei wird ein an der Oberschiene 25 im Bereich des freien Endes des Verriegelungshebels 44' an der Oberschiene drehgelenkig angelenkter und ein Positionierglied 65 darstellender Arretierhebel 83 von einem am Schieber 73 vorgesehenen Anschlag 84 infolge seiner Schwergewichtswirkung freischwenken, so daß die Sperrnase 104 des Arretierhebels 83 den Verriegelungshebel 44' untergreifen kann und in seiner Freigabelage festhält, bis bei der Rückhubbewegung durch Anfahren des Arretierhebels 83 der Anschlag 84 den Arretierhebel aus seiner Sperrlage am Verriegelungshebel 44 zieht, so daß der Verriegelungshebel 44' wieder in die aus Fig. 9 ersichtliche Sperrlage einfallen kann. Da während dieser Verschiebebewegung der Sperrhebel 74 im Schieber 73 seine Lage nicht geändert hat, bleibt auch der Anschlagzapfen 84 ortsunveränderlich, so daß das Positionierglied 65 zur Wiederauffindung der Einstellage benutzbar ist.

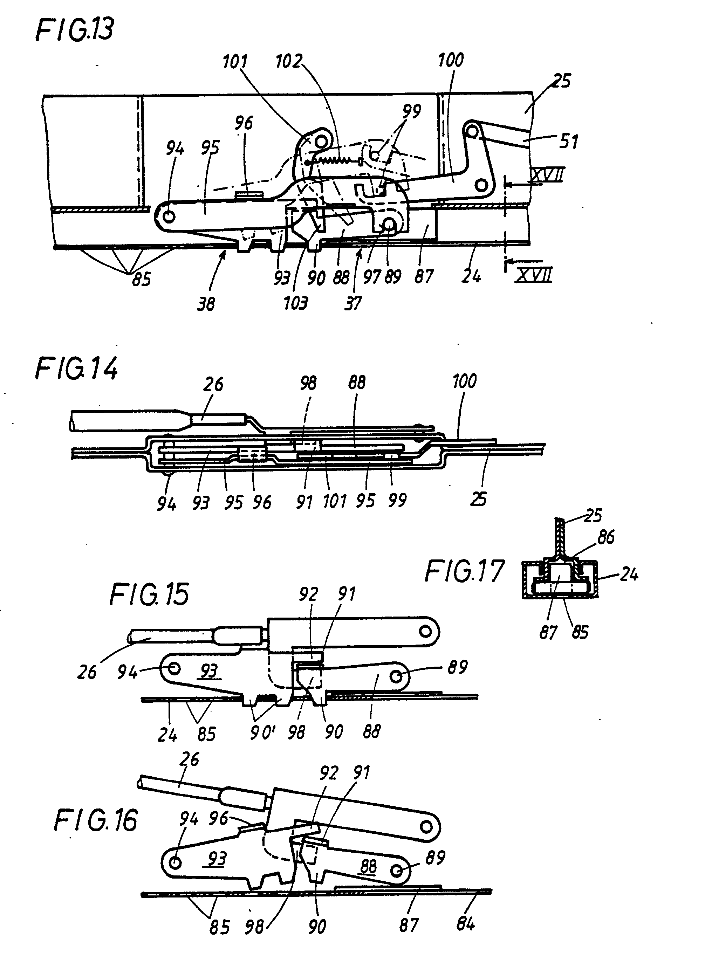

Bei dem aus den Fig. 13 bis 17 ersichtlichen Ausführungsbeispiel ist die Unterschiene 24 gegenüber den Unterschienen der vorbeschriebenen Ausführungsformen verbreitert, stimmt jedoch in ihrem Querschnitt mit diesen überein. Allerdings fehlt bei dieser Unterschiene eine Zahnung im Sinne der vorher beschriebenen Ausführungen. Vielmehr ist hier im Boden der Unterschiene 24 eine Lochreihe 85 angeordnet. Die Oberschiene 25 besteht auch bei dem aus den Fig. 13 bis 17 ersichtlichen Ausführungsbeispiel aus zwei Schienenhälften, die jedoch fest miteinander verbunden sind und in ihrem in die Unterschiene 24 eingreifenden Bereich eine sich zu einer Rechteckausnehmung erweiternde Aufnahme 86 für einen Gleitschieber 87 aufweisen, der zwischen der Oberschiene 25 und dem Boden der Unterschiene 24 verschiebbar in beiden Schienen angeordnet ist.

In diesem Gleitschieber 87 ist ein Sperrhebel 88 gelagert, der Bestandteil der Sperreinrichtung 37 ist. An seinem dem Lagerzapfen 89 gegenüberliegenden Ende weist der Sperrhebel 88 unterseitig eine in die Lochreihe 85 eingreifende Sperrnase 90 auf, während an seiner gegenüberliegenden Oberseite eine Abwinklung 91 angeordnet ist, die von einem Mitnehmerhaken 98 des Handstellhebels 26 untergriffen ist. Die Abwinklung 91 des Sperrhebels 88 ist von einer Anlagenase 92 eines zur Verriegelungseinrichtung 38 gehörenden Verriegelungshebels 93 übergriffen, der unterseitig ebenfalls Sperrnasen 90' zum Eingriff in die Lochreihe 85 der Unterschiene 24 aufweist und auf einem in der Oberschiene 25 festgelegten Achszapfen 94 gelagert ist. Auf diesem Achszapfen 94 ist außerdem ein Distanzhebel 95 gelagert, der dem Achszapfen 94 benachbart von einer Abwinklung 96 des Verriegelungshebels 93 übergriffen ist. Das freie Ende des Distanzhebels 95 ist nach unten abgekröpft und weist in dieser Abkröpfung eine den Lagerzapfen 89 des Sperrhebels 88 übergreifende Schlitzausnehmung 97 auf. Oberhalb dieser Schlitzausnehmung 97 ist am Distanzhebel 95 ein abragender Mitnehmerzapfen 99 angeordnet, der von einem an der Oberschiene 25 drehgelenkig angeordneten, winkelförmigen Auslösehebel 100 untergriffen ist. Dieser Auslösehebel 100 ist - ähnlich wie bei den vorher beschriebenen Ausführungsbeispielen - über eine Zuglasche 51 mit dem Gelenkteil 27 eines Gelenkbeschlages 21 verbunden.

Zur Längslageeinstellung des aus den Fig. 13 bis 17 ersichtlichen Ausführungsbeispieles wird der Handstellhebel 26 angehoben, der dann über seine Mitnehmerhaken 98 zunächst den Sperrhebel 88 aus der Lochreihe 85 der Unterschiene aushebt. Gleichzeitig nimmt der Sperrhebel 88 mit seiner Abwinklung 91 die Anlagenase 92 des Verriegelungshebels 93 mit, so daß nach der aus Fig. 15 ersichtlichen totalen Sperrlage sowohl der Sperrhebel 88 als auch der Verriegelungshebel 93 in eine aus Fig. 16 ersichtliche Freigabelage geschwenkt wird. In dieser Lage läßt sich die Oberschiene und damit der daran befestigte Fahrzeugsitz in die dem Sitzbenutzer genehme Position verschieben und durch Niederfallen des Handstellhebels 26 bzw. durch kraftspeicherbedingte Rückstellung in dieser Lage wieder arretieren. Wenn jedoch die Rückenlehne 22 vorgeklappt wird, so wird in der letzten Phase der Vorschwenkbewegung der Rückenlehne über die Zuglasche 51 der winkelförmige Auslösehebel 100 in die in strichpunktierten Linien in Fig. 13 dargestellte Lage angehoben, wodurch auch der Distanzhebel 95 aus einer Verbindungslage mit dem Gleitschieber 87 gehoben wird. Dabei nimmt der Distanzhebel 95 über die Abwinklung 96 auch den zur Verriegelungseinrichtung 38 gehörenden Verriegelungshebel 93 mit nach oben, so daß die Sperrnasen 90' des Verriegelungshebels aus der Lochreihe 85 ausschwenken. Bei beginnender Vorschubbewegung des Sitzteiles schwenkt auch bei diesem Ausführungsbeispiel ein an der Oberschiene angelenkter Arretierhebel 101 aufgrund der Sperrfeder 102 entgegen dem Uhrzeigersinn und untergreift eine Abwinklung des Distanzhebels 95, wodurch sowohl der Distanzhebel selbst als auch der Verriegelungshebel 93 in der aus Fig. 13 in strichpunktierten Linien ersichtlichen Freigabelage gehalten werden, obwohl gleichzeitig der Sperrhebel 88 seine Sperrlage beibehält. Nach dem Zurückschwenken der Rückenlehne und anschließendem Zurückschieben des Sitzes läuft in der letzten Bewegungsphase der Arretierhebel 101 mit seiner Fühlnase 103 gegen die Stirnfläche des ortsfest verbliebenen Gleitschiebers 87 an und verschenkt im Uhrzeigersinn, wodurch der Distanzhebel 95 und der Verriegelungshebel 93 zur Wiedereinrastung in die Lochreihe 85 freigegeben werden. Damit ist auch bei diesem Ausführungsbeispiel nach dem Vorschwenken und anschließendem Zurückschwenken der Rückenlehne die vorher eingestellte Sitzposition mit Sicherheit wieder auffindbar.

**Patentansprüche**

1.) Kraftfahrzeugsitz, insbesondere für zweitürige Kraftfahrzeuge, dessen Rückenlehne (22) drehgelenkig mit seinem auf einer Schienenanordnung (23) längsverschiebbaren Sitzteil (20) verbunden und nach vorn klappbar ist, wobei die Schienenanordnung eine zur Längsverstellung des Sitzteiles lösbare Verriegelungseinrichtung (38) und eine durch die Rückenlehnenbetätigung lösbare, eine mit dem Verschwenken der Rückenlehne (22) synchrone Verschiebebewegung des Sitzteiles (20) zulassende Sperreinrichtung (37) aufweist, wobei die Verriegelungseinrichtung (38) und die Sperreinrichtung (37) miteinander in aufhebbarer Wirkverbindung stehen,
dadurch gekennzeichnet,
daß die Sperreinrichtung (37) von einem die Wiederauffindung der eingestellten Sitzlängslage ermöglichenden Positionierglied (65) während der Verschiebebewegung des Sitzteiles (20) in seiner Freigabelage festhaltbar ist.

2.) Kraftfahrzeugsitz nach Anspruch 1, dadurch gekennzeichnet, daß die Oberschiene (32) der Schienenanordnung aus einer Halteschiene (34) und einer gegenüber dieser verschiebbaren, mit dem Sitzteil (20) verbundenen Vortransportschiene (33) gebildet ist, wobei sowohl an der Halteschiene als auch an der Vortransportschiene ein Sperrhebel (39, 44) schwenkbar gelagert ist, wovon der der Vortransportschiene (33) zugeordnete Sperrhebel (39) einen deckungsgleiche Schwenkschlitze (42) in Halte- und Vortransportschiene durchquerenden Mitnehmerzapfen (41) aufweist, der in einen Schlitz (43) des der Halteschiene (34)

zugeordneten Riegelhebels (44) eingreift, der von einem Handstellhebel (26) betätigbar ist.

3.) Kraftfahrzeugsitz nach Anspruch 2, dadurch gekennzeichnet, daß der der Vortransportschiene (33) zugeordnete Sperrhebel (39) durch einen mit der Rückenlehne (22) in Verbindung stehenden Hebelmechanismus (50, 51) allein aus seiner Verriegelungslage mit einer Unterschiene (24) der Schienenanordnung aushebbar ist.

4.) Kraftfahrzeugsitz nach Anspruch 3, dadurch gekennzeichnet, daß der der Vortransportschiene (33) zugeordnete Sperrhebel (39) durch einen ein Positionierglied bildenden, einen Haltenocken (63) am Sperrhebel (39) beim Vorlauf der Vortransportschiene untergreifenden Arretierhebel (61) in seiner Freigabelage gehalten ist, bis nach dem Rücklauf der Vortransportschiene (33) der Arretierhebel (61) durch einen an der Halteschiene (34) angeordneten Anschlag (64) aus seiner Arretierlage gedrückt ist und den Sperrhebel (39) zur erneuten Sperrung freigibt.

5.) Kraftfahrzeugsitz nach einem oder mehreren der vorhergehenden Ansprüche, dadurch gekennzeichnet, daß der der Vortransportschiene (33) zugeordnete Sperrhebel (39) durch einen an der Vortransportschiene (33) gelagerten Winkelhebel (50) im Entriegelungssinne betätigbar ist und über eine Zuglasche (51) mit dem Hebelarm eines an der Vortransportschiene (33) gelagerten, mit der Rückenlehne (22) verbundenen Gelenkbeschlages (21) verbunden ist.

6.) Kraftfahrzeugsitz nach einem oder mehreren der Ansprüche 1 bis 4, dadurch gekennzeichnet, daß an der Vortransportschiene (33) der mit der Rückenlehne (22) verbundene Gelenkbeschlag (21) schwenkbar gelagert ist und mit einem Schwenkarm (27) mit einer Koppellasche (66) drehgelenkig verbunden ist, die ihrerseits an der Halteschiene (34) angelenkt ist.

7.) Kraftfahrzeugsitz nach Anspruch 1, dadurch gekennzeichnet, daß außer der in einer Unterschiene (24) insgesamt verschiebbar angeordneten, den Sitzteil (20) tragenden Oberschiene (25) eine Hilfsschiene (71) mit einem darin angeordneten Schieber (73) vorgesehen ist, in dem ein in Löcher (72) einer Lochreihe der Hilfsschiene (71) einschwenkbarer Sperrhebel (74) gelagert ist, dessen aus Schieber und Hilfsschiene ausragender Aushubzapfen (77) von einem an der Oberschiene (55) gelagerten Handhebel (26) im Aushubsinne betätigbar ist, wobei der Handhebel (26) seinerseits einen Betätigungszapfen (69) aufweist, der im Lösesinne auf einen an der Oberschiene (25) gelagerten, in eine Zahnreihe (30) der Unterschiene (24) sperrend eingreifenden Verriegelungshebel (44') einwirkt, der durch einen an der Oberschiene (55) gelagerten, von der Schwenkbewegung der Rückenlehne (22) betätigbaren Winkelhebel (80) ebenfalls lösbar ist.

8.) Kraftfahrzeugsitz nach Anspruch 7, dadurch gekennzeichnet, daß der Schieber (73) einerseits einen aus der Hilfsschiene (71) ausragenden Haltezapfen (78) zum Eingriff in eine Schlitzaufnahme des Winkelhebels (80) und andererseits einen Anschlag (84) für einen an der Oberschiene (25) gelagerten, die Wiederfestlegung der Ausgangslage herstellenden Arretierhebel (83) aufweist, wobei der Arretierhebel während der Vorschiebebewegung der Oberschiene den Verriegelungshebel (44') in seiner Freigabelage hält.

9.) Kraftfahrzeugsitz nach Anspruch 1, dadurch gekennzeichnet, daß der von einem Handstellhebel (26) im Lösesinne betätigbare, in eine Lochreihe (85) der Unterschiene (24) eingreifende Sperrhebel (88) in einem zwischen Oberschiene (25) und Unterschiene (24) angeordneten Gleitschieber (87) gelagert ist und einen ebenfalls in die Lochreihe (85) der Unterschiene (24) eingreifenden, an der Oberschiene gelagerten Verriegelungshebel (93) untergreift, der seinerseits mit einem ebenfalls an der Oberschiene (25) gelagerten, den Gleitschieber (87) halternden Distanzhebel (95) im Lösesinn gekuppelt ist, wobei der Distanzhebel (95) über einen Mitnehmerzapfen (99) von einem an der Oberschiene (25) gelagerten und durch die Schwenkbewegung der Rückenlehne (22) betätigbaren Auslösehebel (100) im Lösesinne aus seiner Verbindung mit dem Gleitschieber (87) lösbar ist.

10.) Kraftfahrzeugsitz nach Anspruch 9, dadurch gekennzeichnet, daß der Verriegelungshebel (93) mit dem Distanzhebel (95) durch eine den Distanzhebel übergreifende verriegelungsseitige Abwinklung (96) gekuppelt ist und der Distanzhebel (95) durch einen an der Oberschiene (25) angelenkten Arretierhebel (101) in Löselage bei vorgeschobener Oberschiene (25) halterbar ist, wobei der Arretierhebel (101) eine Fühlnase (103) aufweist, die am Gleitschieber (87) beim Rücklauf der Oberschiene (25) anschlagend Distanzhebel (95) und Verriegelungshebel (93) zur erneuten Verriegelung zwischen Oberschiene und Unterschiene freigibt.

**Claims**

1. A vehicle seat, in particular for two-door vehicles, whose backrest (22) is pivotally connected with its seat element (20) movable longitudinally on a rail arrangement, and is tiltable forwardly, wherein the rail arrangement is provided with a locking device (38) releasable for longitudinal adjustment of the seat element and an arresting device (37) releasable by actuation of the backrest and permitting shifting of the seat element (20) synchronous with the tilting of the backrest (22), wherein the locking device (38) and the arresting device (37) are in suspendable interaction,

characterized in

that the arresting device (37) can be retained in its release position by a positioning member (65) permitting the retrieval of the adjusted longitudinal seat position during shifting movement of the seat element (20).

2. A vehicle as claimed in the claim 1, characterized in that the upper rail (32) of the rail arrangement is formed of a holding rail (34) and an advance transport rail (33) movable with respect to the same (34) and connected with the seat element (20), wherein both on the holding rail and on the advance transport rail a locking lever (39, 44) is pivotally supported, of which the locking lever (39) associated with the advance transport rail (33) has a follower pin (41) passing through coinciding pivotal slots (42) in the holding and the advance transport rails, which engages in a slot (43) of the locking lever (44) associated with the holding rail (34), which (44) can be actuated by a manually adjusting lever (26).

3. A vehicle seat as claimed in the claim 2, characterized in that the locking lever (39) associated with the advance transport rail (33) alone is removable by a lever mechanism (50, 51) being in connection with the backrest (22), from its locked position with the bottom rail (24) of the rail arrangement.

4. A vehicle seat as claimed in the claim 3, characterized in that the locking lever (39) associated with the advance transport rail (33) is held in its release position by an arresting lever (61) forming a positioning member and gripping underneath a holding cam (63) on the locking lever (39) during advance movement of the advance transport rail, until after return of the advance transport rail (33) the arresting lever (61) is forced out of its arresting position by a stop/mounted on the holding rail (34) and /(64) releases the arresting lever (39) for another arrest.

5. A vehicle seat as claimed in any one or several of the preceding claims, characterized in that the arresting lever (39) associated with the advance transport rail (33) can be actuated in a releasing sense by angle lever (50) mounted on the advance transport rail (33) and is connected via a tie bar (51) with the lever arm of a hinge fitting (21) supported on the advance transport rail (33) and connected with the backrest (22).

6. A vehicle seat as claimed in any one or several of the claims 1 to 4, characterized in that the hinge fitting (21) connected with the backrest (22) is tiltably connected to the advance transport rail (33) and has a swivel arm (27) pivotally connected with a coupling bar (66), which, in turn, is pivoted to the holding rail (34).

7. A vehicle seat as claimed in the claim 1, characterized in that, in addition to the upper rail (25) arranged movably as a whole in a lower rail (24) and carrying the seat element (20), there is provided an auxiliary rail (71) having a slide (73) mounted therein, in which there is supported an arresting lever (74) which can be swivelled into holes (72) of an array of holes of the auxiliary rail (71) whose lifting pin (77) protruding from slide and auxiliary rail can be actuated by a manual lever (26) supported on the upper rail (25) in a lifting sense, wherein the manual lever (26), in turn, has an actuating pin (69) which acts in a releasing sense on a locking lever (44') supported on the upper rail (25) lockingly engaging in a row of teeth (30) of the lower rail (24), which (44') is also relesable by an angle lever (80) supported on the upper rail (25) actuatable by the tilting movement of the backrest (22).

8. A vehicle seat as claimed in the claim 7, characterized in that the slide (73) on the one hand has a holding pin (78) protruding from the auxiliary rail (71) for engagement in a slot seat of the angle lever (80) and on the other hand a stop (84) for an arresting lever (83) supported on the upper rail (25) establishing the restitution of the output position, the arresting lever retaining the locking lever (44') in its release position during advance movement of the upper rail.

9. A vehicle seat as claimed in the claim 1, characterized in that the arresting lever (88) adapted to be actuated in a releasing sense by a manually adjusting lever (26) and engaging in an array of holes (85) in the lower rail (24) is supported in a slider/arranged between upper rail /(87) (25) and lower rail (24) and grips underneath a locking lever (93) also engaging in the array of holes (85) of the lower rail (24) and supported on the upper rail, which, in turn, is coupled in a releasing sense with a spacing lever (95) also supported on the upper rail (25), mounting the slider (87), the spacing lever (95) being releasable via a follower pin (99) in a releasing sense from its connection with the slider (87) by a releasing lever (100) supported on the upper rail (25) and adapted to be actuated by the tilting movement of the backrest (22).

10. A. vehicle seat as claimed in the claim 9, characterized in that the locking lever (93) is coupled with the spacing lever (95) via an angled-off part (96) on the side of the lock gripping over the spacing lever, and the spacing lever (95) is retainable in releasing position by an arresting lever (101) pivoted to the upper rail (25), when the upper rail (25) is advanced, the arresting lever (101) having a contact nose (103) which upon contact with the slider (87) during return of the upper rail (25), releases the spacing lever (95) and the locking lever (93) for another locking between upper rail and lower rail.

**Revendications**

1.- Siège pour véhicule automobile, notamment pour un véhicule automobile à deux portes, dont le dossier (22) est articulé à pivotement sur l'élément d'assise (20) associé qui est déplaçable longitudinalement sur un ensemble de rails (23), ledit dossier étant rabattable vers l'avant, cependant que ledit ensemble de rails comporte un dispositif de verrouillage (38) déverrouillable en vue d'un déplacement longitudinal de l'élément d'assise, ainsi qu'un dispositif de blocage (37) permettant un déplacement en translation de l'élément d'assise (20) en synchronisme avec le pivotement du dossier, lesdits dispositifs de verrouillage et de blocage (37, 38) étant liés l'un à l'autre par une liaison cinétique annulable, caractérisé en ce que le dispositif de blocage (37) est susceptible d'être maintenu dans sa position de déblocage, pendant le déplacement de l'élément d'assise (20), par un élément de positionnement (65) permettant de retrouver la position d'ajustage longitudinal du siège.

2.- Siège de véhicule automobile selon la revendication 1, caractérisé en ce que le rail supérieur (32) de l'ensemble de rails est constitué par un rail de maintien (34) et un rail de déplacement d'avance (33) lié à l'élément d'assise (20) et déplaçable par rapport audit rail de maintien, cependant qu'un levier de blocage (39, 44) est monté à pivotement, et sur le rail de maintien, et sur le rail de déplacement d'avance, respectivement, le levier de blocage (39) associé au rail de déplacement d'avance (33) comporte un tenon entraîneur (41) traversant des fentes de pivotement (42) disposées en recouvrement dans les rails de maintien et de déplacement d'avance, ledit tenon entraineur s'engageant dans une fente (43) du levier de blocage (44) qui est associé au rail de maintien et qui est susceptible d'être actionné à l'aide d'un levier d'ajustage à main (26).

3.- Siège de véhicule automobile selon la revendication 2, caractérise en ce que le levier de blocage (39) associé au rail de déplacement d'avance (33) est susceptible d'être dégageable seul à partir de sa position de blocage par rapport à un rail inférieur (24), à l'aide d'un mécanisme à leviers (50, 51) lié au dossier (22).

4.- Siège de véicule automobile selon la revendication 3, caractérisé en ce que le levier de blocage (39) associé au rail de déplacement d'avance (33) est maintenu, pendant le mouvement d'avance de ce rail (39), dans sa position de dégagement par un levier d'arrêt (61) formant organe de positionnement et s'engageant lors de ce mouvement d'avance sous une came de maintien (63) disposée sur le levier de blocage (39), jusqu'à ce qu'après le déplacement de retour du rail de déplacement d'avance (33) le levier d'arrêt (61) soit poussé hors de sa position d'arrêt par une butée (64) disposée sur le rail de maintien (34), de manière à libérer à nouveau le levier de blocage (39) en vue d'un processus de blocage consécutif.

5.- Siège de véhicule automobile selon une ou plusieurs des revendications précédentes, caractérisé en ce que le levier de blocage (39) associé audit rail de déplacement d'avance (33) est susceptible d'être actionné dans le sens du déblocage par un levier coudé (50) articulé sur ledit rail de déplacement d'avance (33) et lié par l'intermédiaire d'une languette de traction (51) au bras de levier d'une garniture d'articulation (21) articulée sur ledit rail de déplacement d'avance (33) et reliée au dossier (22) du siège.

6.- Siège de véhicule automobile selon une ou plusieurs des revendications 1 à 4, caractérisé en ce que les dispositifs de verrouillage et de blocage, la garniture d'articulation (21) liée au dossier (22) est montée à pivotement sur le rail de déplacement d'avance (33) et reliée par un bras de pivotement (27) d'une manière articulée à une languette d'accouplement (66) qui est articulée, à son tour, sur le rail de maintien (34).

7.- Siège de véhicule automobile selon la revendication 1, caractérisé en ce que le siège comporte, outre un rail supérieur (25) monté de manière déplaçable dans son ensemble, dans un rail inférieur (24) et portant l'élément d'assise (20), un rail auxiliaire (71) dans lequel est monté un coulisseau (73) sur lequel est articulé un levier de blocage (74) susceptible de s'engager, en pivotant, dans les trous (72) d'une rangée de trous ménagés dans ledit rail auxiliaire (71), cependant qu'un tenon de dégagement (77) dudit levier de blocage est appelé à être actionné dans le sens du dégagement par un levier à main (26) articulé sur ledit rail supérieur (55), ledit levier à main (26) comportant, à son tour, un tenon d'actionnement (69) qui agit dans le sens du déblocage sur un levier de verrouillage (44') articulé sur le rail supérieur (25) et s'engageant en vue du blocage dans une denture (30) du rail inférieur (24), ce levier de verrouillage (44') étant également dégageable par un levier coudé (80) articulé sur le rail supérieur (55) et capable d'être actionné par le mouvement de pivotement du dossier (22) dudit siège.

8.- Siège de véhicule automobile selon la revendication 7, caractérisé en ce que le coulisseau (73) comporte, d'une part, un tenon d'arrêt (78) appelé à s'engager dans un évidement en forme de fente du levier coudé (80) et, d'autre part, une butée (84) coopérant avec un levier d'arrêt (83) articulé sur le rail supérieur (25) et appelé à rétablir et fixer le siège dans sa position initiale, ledit levier d'arrêt maintenant le levier de verrouillage (44') dans sa position de dégagement, pendant le déplacement d'avance dudit rail supérieur.

9.- Siège de véhicule selon la revendication 1, caractérisé en ce que le levier de blocage (88) susceptible d'être actionné par un levier de commande à main (26) dans le sens du déblocage, et appelé à s'engager dans une rangée de trous (85) ménagés dans le rail inférieur (24) est articulé dans un coulisseau (87) disposé entre les rails supérieur (25) et inférieur (24) et s'engageant sous un levier de verrouillage (93) qui s'engage également dans la rangée de trous (85) du rail inférieur (24) et qui est accouplé, à son tour, dans le sens du déblocage à un levier d'espacement (95) articulé également sur le rail supérieur (25) et portant ledit coulisseau (87) cependant que ledit levier d'espacement (95) est susceptible d'être dégagé dudit coulisseau (87) par un levier de déclenchement (100) articulé sur le rail supérieur (25) et susceptible d'être actionné dans le sens du dégagement par le mouvement de pivotement du dossier (22), par l'intermédiaire d'un tenon d'entraînement (99).

10.- Siège de véhicule automobile selon la revendication 9, caractérisé en ce que ledit lévier de verrouillage (93) est accouplé au levier d'espacement (95) par une partie coudée (96) du côté du verrouillage, qui passe par-dessus le levier d'espacement, et que ledit levier d'éspacement (95) est susceptible d'être maintenu dans la position de dégagement par un levier d'arrêt (101) articulé sur ledit rail supérieur (25), lorsque le rail supérieur est dans sa position avancée, cependant que ledit levier d'arrêt (101) comporte un nez palpeur (103) qui, en entrant en butée lors du mouvement de recul du rail supérieur (25), libère le levier d'espacement (95) et le levier de verrouillage (93) en vue d'un nouveau verrouillage réciproque du rail supérieur et du rail inférieur.

# FIG.1

FIG.3

26    30         47  44  46   38  41        34

29    36    39  40  37  40    33  32        27  35

FIG.4

48    47    32  46  42  41  43    34    33

26

28    30  29  45    44  40  38  40        28

0 135 596

FIG.5

FIG.6

FIG.2

FIG.2a

0 135 596

FIG. 7

FIG.8

FIG.9

FIG.10

FIG.11

FIG.12

FIG.13

FIG.14

FIG.15

FIG.16

FIG.17